# EUROPEAN PATENT APPLICATION

(11) **EP 2 894 937 A2**
(43) Date of publication of application: **15.07.2015**
(21) Application number: 13794481.5
(22) Date of filing: 31.07.2013
(51) Int. Cl.: H04W 88/04, H04M 1/725

(54) **METHOD AND SYSTEM FOR CONTROLLING MESSAGE OF MOBILE TERMINAL, AND MOBILE TERMINAL**

(30) Priority: 06.09.2012 CN 201210326430
(71) Applicant: ZTE Corporation, Shenzhen, Guangdong 518057 (CN)
(72) Inventor: WU, Hongxin, Shenzhen Guangdong 518057 (CN); XU, Yinglei, Shenzhen Guangdong 518057 (CN)
(74) Representative: Novagraaf Technologies
(86) International application number: PCT/CN2013/080555
(87) International publication number: WO 2013/174353

(57) **Abstract**

A method and system for controlling a message of a mobile terminal and the mobile terminal are provided in the present invention. The method includes that: an application platform receives a message to be processed of the mobile terminal, which is forwarded by a management platform, wherein the message to be processed is transmitted to the management platform by the mobile terminal; and the application platform displays information to be processed in the message to be processed. By the present invention, the problem that a user needs to subscribe to a specific service of an operator to be reminded of the information to be processed in a related art is solved, so that flexibility in control over the message of the mobile terminal is improved, usability in control over the message of the mobile terminal is improved, and the perceptibility of the user over the information to be processed is improved.

## Description

### Technical Field

The present invention relates to the field of communication, including, e.g., a method and system for controlling a message of a mobile terminal, and a mobile terminal.

### Background

In the related art, most of mobile phone services are controlled by an operator side. For example, the operator side may forward an incoming call of a user by a call forwarding service, and may prompt the user of a missed call by services such as a call reminding service and SmartCall. It can be seen that most of the mobile phone services need to be implemented by subscribing to specific services of an operator.

For at least one problem in a related art, there is yet no effective solution.

### Summary

The embodiments of the present invention provides a method and system for controlling a message of a mobile terminal and the mobile terminal, so as to at least solve the problem that a user needs to subscribe to a specific service of an operator to remind of information to be processed in a related art.

According to an embodiment of the present invention, a method for controlling a message of a mobile terminal is provided, including that: an application platform receives a message to be processed of the mobile terminal, which is forwarded by a management platform, wherein the message to be processed is transmitted to the management platform by the mobile terminal; and the application platform displays information to be processed in the message to be processed.

According to an embodiment of the present invention, before the application platform receives the message to be processed of the mobile terminal, which is forwarded by the management platform, the method for controlling the message of the mobile terminal further includes that: the mobile terminal transmits the message to be processed to the management platform according to a transmission rule, wherein the transmission rule includes at least one of: information for indicating a type of the information to be processed, which is to be transmitted, and information for indicating a filtering condition for transmission of the information to be processed, which is to be transmitted.

According to an embodiment of the present invention, the transmission rule is directly set on the mobile terminal; and/or, the application platform transmits the set transmission rule to the mobile terminal.

According to an embodiment of the present invention, the application platform transmits the set transmission rule to the mobile terminal includes that: the application platform transmits an authentication message and the transmission rule to the management platform, wherein an identifier of the mobile terminal is carried in the authentication message; and the management platform performs subscribing relationship authentication on the mobile terminal, and under a condition that the mobile terminal passes the subscribing relationship authentication, transmits the transmission rule to the mobile terminal according to the identifier of the mobile terminal.

According to an embodiment of the present invention, before the application platform receives the message to be processed of the mobile terminal, which is forwarded by the management platform, the method for controlling the message of the mobile terminal further includes that: the management platform performs format check on the message to be processed, and performs the subscribing relationship authentication on the mobile terminal; and under a condition that the message to be processed passes the format check and the mobile terminal passes the subscribing relationship authentication, the management platform forwards the message to be processed to the application platform according to a subscribing relationship of the mobile terminal.

According to an embodiment of the present invention, the application platform displays the information to be processed includes that: the application platform performs permission authentication on the message to be processed, wherein a permission is used for indicating whether the information to be processed in the message to be processed is permitted to be displayed on the application platform or not; and under a condition that the message to be processed passes the permission authentication, the application platform displays the information to be processed.

According to an embodiment of the present invention, after the application platform displays the information to be processed, the method for controlling the message of the mobile terminal further includes that: the application platform transmits a reply message for the information to be processed to the management platform, wherein the reply message includes: reply information for the information to be processed, an identifier of the mobile terminal and a source identifier of the information to be processed; and the management platform performs authentication on the reply message, and under a condition that the reply message passes the authentication, transmits the reply message to source equipment of the information to be processed according to a forwarding identifier carried in the reply message, or forwards the reply message to the mobile terminal, and the mobile terminal transmits the reply message to the source equipment of the information to be processed.

According to an embodiment of the present invention, the information to be processed includes at least one of: a short message to be processed, a missed call, QQ information to be processed and Microsoft Network (MSN) information to be processed.

According to another aspect of the present invention, a mobile terminal is provided, including: an acquiring component, configured to acquire information to be processed of the mobile terminal and generate a message to be processed, wherein the message to be processed includes the information to be processed; and a first transmitting component, configured to transmit the message to be processed to a management platform and forward the message to be processed to an application platform through the management platform, wherein the application platform displays the information to be processed.

According to a third aspect of the present invention, a system for controlling a message of a mobile terminal is provided, where the system comprises: any above-mentioned mobile terminal; a management platform, configured to forward the message to be processed, which is transmitted by the mobile terminal, to an application platform; and the application platform, configured to receive the message to be processed and display information to be processed in the message to be processed.

According to the present invention, the mobile terminal generates the message to be processed by using the information to be processed on the mobile terminal, transmits the message to be processed to the management platform, and forwards the message to be processed to the application platform through the management platform, and the application platform displays the information to be processed in the message to be processed, so that the user can be reminded of the information to be processed without subscribing to the specific service of the operator, and flexibility in control over the message of the mobile terminal is improved; and meanwhile, the application platform displays the information to be processed in the message to be processed to notify the information to be processed to the user, so that the user can be reminded of the information to be processed even though the mobile terminal is not around, usability in control over the message of the mobile terminal is improved, and the perceptibility of the user over the information to be processed is improved.

### Brief Description of the Drawings

The drawings are described here to provide further understanding of the present invention, and form a part of the present invention. The schematic embodiments and description of the present invention are adopted to explain the present invention, and do not form improper limits to the present invention. In the drawings:
Fig. 1 is a flowchart of a method for controlling a message of a mobile terminal according to an embodiment of the present invention;
Fig. 2 is a structure diagram of a mobile terminal according to an embodiment of the present invention;
Fig. 3 is a structure diagram of another mobile terminal according to an embodiment of the present invention;
Fig. 4 is a structure diagram of a system for controlling a message of a mobile terminal according to an embodiment of the present invention;
Fig. 5 is a structure diagram of another system for controlling a message of a mobile terminal according to an embodiment of the present invention;
Fig. 6 is a structure diagram of a third system for controlling a message of a mobile terminal according to an embodiment of the present invention;
Fig. 7 is a structure diagram of a fourth system for controlling a message of a mobile terminal according to an embodiment of the present invention;
Fig. 8 is a flowchart of controlling a short message and a missed call of a user by utilizing a method for controlling a message of a mobile terminal according to an embodiment of the present invention; and
Fig. 9 is a flowchart of controlling a QQ/MSN message of a mobile phone of a user by utilizing a method for controlling a message of a mobile terminal according to an embodiment of the present invention.

### Detailed Description of the Embodiments

The present invention is described below with reference to the drawings and the embodiments in detail. It is important to note that the embodiments of the present invention and the characteristics in the embodiments can be combined under the condition of no conflicts.

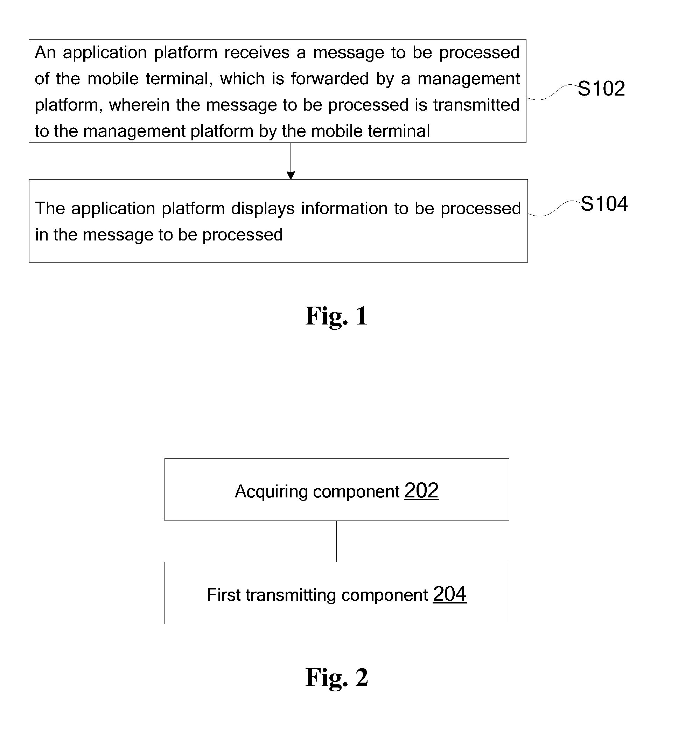

A method for controlling a message of a mobile terminal is provided in the embodiment of the present invention, and as shown in Fig. 1, the method for controlling the message of the mobile terminal includes S102 to S104.

S102: an application platform receives a message to be processed of the mobile terminal, which is forwarded by a management platform, wherein the message to be processed is transmitted to the management platform by the mobile terminal.

S104: the application platform displays information to be processed in the message to be processed.

By the steps, the mobile terminal generates the message to be processed by using the information to be processed on the mobile terminal, transmits the message to be processed to the management platform, and forwards the message to be processed to the application platform through the management platform, and the application platform displays the information to be processed in the message to be processed, so that the user can be reminded of the information to be processed without subscribing to the specific service of the operator, and flexibility in control over the message of the mobile terminal is improved; and meanwhile, the application platform displays the information to be processed in the message to be processed to notify the information to be processed to the user, so that the user can be reminded of the information to be processed even though the mobile terminal is not around, usability in control over the message of the mobile terminal is improved, and the perceptibility of the user over the information to be processed is improved.

According to an embodiment of the present invention, in order to facilitate the authentication over the mobile terminal and improve the security of the information, the message to be processed can further include: an identifier of the mobile terminal and a source identifier of the information to be processed, besides the information to be processed.

In order to flexibly transmit the information to be processed on the mobile terminal to meet requirements of different application scenarios, in the preferred embodiment, before the application platform receives the message to be processed of the mobile terminal, which is forwarded by the management platform, the method for controlling the message of the mobile terminal further includes that: the mobile terminal transmits the message to be processed to the management platform according to a transmission rule, wherein the transmission rule includes at least one of: information for indicating a type of the information to be processed, which is to be transmitted, and information for indicating a filtering condition for transmission of the information to be processed, which is to be transmitted. That is, the transmission rule can be set according to a habit or requirement of the user; the information indicating the type of the information to be processed, which is to be transmitted, for example, which information to be processed is to be transmitted and which information to be processed is not to be transmitted can be set according to the requirement. For example, according to the requirement, information to be processed such as short message information and a missed call can be set to be transmitted, QQ information to be processed can be set not to be transmitted, and the information of all types can also be set to be transmitted; and the filtering condition of the information to be processed, which is to be transmitted, can also be set, for example, if the short message information to be processed is set to be transmitted, a time frame in which the short message information to be processed is to be transmitted can further be set in order to the user to conveniently perceive the information to be processed.

In order to meet the requirements of different application scenarios and improve the setting flexibility of the transmission rule, in the preferred embodiment, the transmission rule is directly set on the mobile terminal; and/or, the application platform transmits the set transmission rule to the mobile terminal, that is, different manners for setting the transmission rule can be selected according to different application scenarios, the transmission rule can be directly set on the mobile terminal, and can also be set through the application platform. Setting operation is conducted on an application display interface of the application platform, then the application platform transmits the set transmission rule to the mobile terminal through the management platform, and the mobile terminal performs setting according to the received transmission rule.

In order to improve the security of the information, in the preferred embodiment, before the application platform receives the message to be processed of the mobile terminal, which is forwarded by the management platform, the method for controlling the message of the mobile terminal further includes that: the management platform performs format check on the message to be processed, and performs subscribing relationship authentication on the mobile terminal; and under the condition that the message to be processed passes the format check and the mobile terminal passes the subscribing relationship authentication, the management platform forwards the message to be processed to the application platform according to a subscribing relationship of the mobile terminal. That is, after the message to be processed passes the format check and the mobile terminal passes the subscribing relationship authentication, the message to be processed is transmitted to the application platform, so that the security of the information is improved.

In order to correctly display the information to be processed, in the preferred embodiment, that the application platform displays the information to be processed includes that: the application platform performs permission authentication on the message to be processed, wherein a permission is used for indicating whether the information to be processed in the message to be processed is permitted to be displayed on the application platform or not; and under the condition that the message to be processed passes the permission authentication, the application platform displays the information to be processed. That is, after that the information to be processed can be displayed is determined, the information to be processed is displayed.

In order to improve the flexibility of operation of the user over the information to be processed, in the preferred embodiment, after the application platform displays the information to be processed, the method for controlling the message of the mobile terminal further includes that: the application platform transmits a reply message for the information to be processed to the management platform, wherein the reply message includes: reply information for the information to be processed, the identifier of the mobile terminal and a source identifier of the information to be processed; and the management platform performs authentication on the reply message, and under the condition that the reply message passes the authentication, transmits the reply message to source equipment of the information to be processed according to a forwarding identifier carried in the reply message, or forwards the reply message to the mobile terminal, and the reply message is transmitted by the mobile to the source equipment of the information to be processed. That is, the user can process the information to be processed through the management platform, and directly transmits the processed rely message to the source equipment of the information to be processed through the management platform; and the information to be processed can also be processed through the management platform, the management platform forwards the processed reply message to the mobile terminal, and the mobile terminal automatically transmits the received reply message to the source equipment of the information to be processed.

In order to meet application requirements of different users and improve the practicability, in the preferred embodiment, the information to be processed can include at least one of: a short message to be processed, a missed call, QQ information to be processed, MSN information to be processed and the like.

In the preferred embodiment, a preferred mobile terminal is provided, and as shown in Fig. 2, the mobile terminal includes: an acquiring component 202, which is configured to acquire the information to be processed of the mobile terminal and generate a message to be processed, wherein the message to be processed includes the information to be processed; and a first transmitting component 204, connected to the acquiring component 202, which is configured to transmit the message to be processed to a management platform and forward the message to be processed to an application platform through the management platform, wherein the application platform displays the information to be processed.

In the preferred embodiment, the acquiring component 202 generates the message to be processed by using the information to be processed on the mobile terminal, the first transmitting component 204 transmits the message to be processed to the management platform, and forwards the message to be processed to the application platform through the management platform, and the application platform displays the information to be processed in the message to be processed, so that the user can be reminded of the information to be processed without subscribing to the specific service of the operator, and flexibility in control over the message of the mobile terminal is improved; and meanwhile, the application platform displays the information to be processed in the message to be processed to notify the information to be processed to the user, so that the user can be reminded of the information to be processed even though the mobile terminal is not around, usability in control over the message of the mobile terminal is improved, and the perceptibility of the user over the information to be processed is improved.

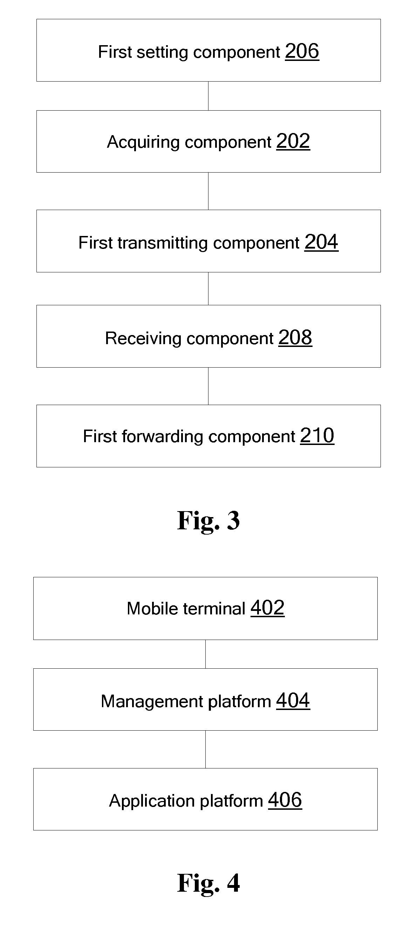

In order to meet the requirements of different application scenarios and improve the setting flexibility of a transmission rule, in the preferred embodiment, as shown in Fig. 3, the mobile terminal further includes: a first setting component 206, which is configured to set the transmission rule.

In order to improve the flexibility of operation of the user over the information to be processed, in the preferred embodiment, as shown in Fig. 3, the mobile terminal further includes: a receiving component 208, which is configured to receive a reply message for the information to be processed, which is forwarded by the management platform, wherein the reply message is transmitted by the application platform, and the reply message includes reply information for the information to be processed, an identifier of the mobile terminal and a source identifier of the information to be processed; and a first forwarding component 210, connected to the receiving component 208, which is configured to forward the reply message to source equipment of the information to be processed.

In the preferred embodiment, a preferred system for controlling a message of a mobile terminal is provided, and as shown in Fig. 4, the system for controlling the message of the mobile terminal includes: the mobile terminal 402; a management platform 404, connected to the mobile terminal 402, which is configured to forward a message to be processed, which is transmitted by the mobile terminal, to an application platform; and the application platform 406, connected to the management platform 404, which is configured to receive the message to be processed and display information to be processed in the message to be processed.

In the preferred embodiment, the mobile terminal 402 generates the message to be processed by using the information to be processed on the mobile terminal 402, transmits the message to be processed to the management platform 404, and forwards the message to be processed to the application platform 406 through the management platform 404, and the application platform 406 displays the information to be processed in the message to be processed, so that the user can be reminded of the information to be processed without subscribing to the specific service of the operator, and flexibility in control over the message of the mobile terminal is improved; and meanwhile, the application platform displays the information to be processed in the message to be processed to notify the information to be processed to the user, so that the user can be reminded of the information to be processed even though the mobile terminal is not around, usability in control over the message of the mobile terminal is improved, and the perceptibility of the user over the information to be processed is improved.

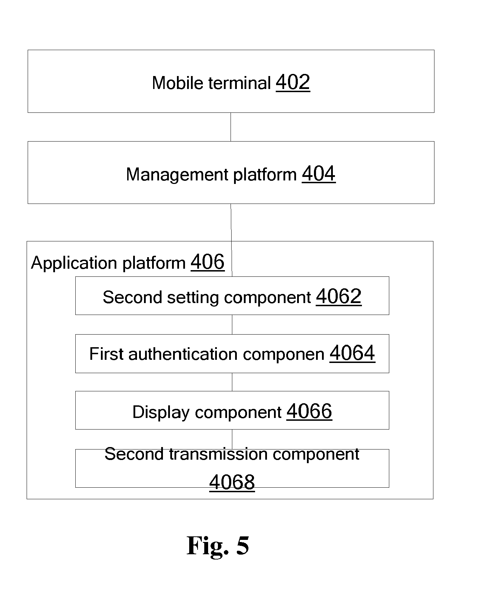

In order to meet the requirements of different application scenarios and improve the setting flexibility of a transmission rule, in the preferred embodiment, as shown in Fig. 5, the application platform includes: a second setting rule 4062, which is configured to set the transmission rule and transmit the set transmission rule to the mobile terminal.

In order to correctly display the information to be processed, in the preferred embodiment, as shown in Fig. 5, the application platform 406 further includes: a first authentication component 4064, which is configured to perform permission authentication on the message to be processed, wherein a permission is used for indicating whether the information to be processed in the message to be processed is permitted to be displayed on the application platform or not; and a display component 4066, connected to the first authentication component 4064, which is configured to, under the condition that the message to be processed passes the permission authentication, display the information to be processed.

In order to improve the flexibility of operation of the user over the information to be processed, in the preferred embodiment, as shown in Fig. 5, the application platform 406 further includes: a second transmission component 4068, which is configured to transmit a reply message for the information to be processed to the management platform, wherein the reply message includes: reply information for the information to be processed, an identifier of the mobile terminal and a source identifier of the information to be processed.

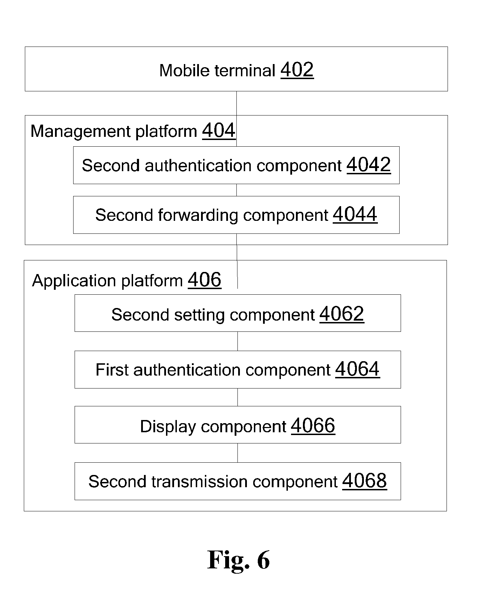

In order to improve the security of the information, in the preferred embodiment, as shown in Fig. 6, the management platform 404 includes: a second authentication component 4042, which is configured to perform format check on the message to be processed and perform subscribing relationship authentication on the mobile terminal; and a second forwarding component 4044, connected to the second authentication component 4042, which is configured to, under the condition that the message to be processed passes the format check and the mobile terminal passes the subscribing relationship authentication, forward the message to be processed to the application platform according to a subscribing relationship of the mobile terminal.

In order to improve the flexibility of operation of the user over the information to be processed, in the preferred embodiment, the second forwarding component 4044 is further configured to perform authentication on the reply message for the information to be processed, and under the condition that the reply message passes the authentication, transmit the reply message to source equipment of the information to be processed according to a forwarding identifier carried in the reply message, or forward the reply message to the mobile terminal for the mobile terminal to transmit the reply message to the source equipment of the information to be processed.

Each preferred embodiment is described below with reference to the drawings in detail.

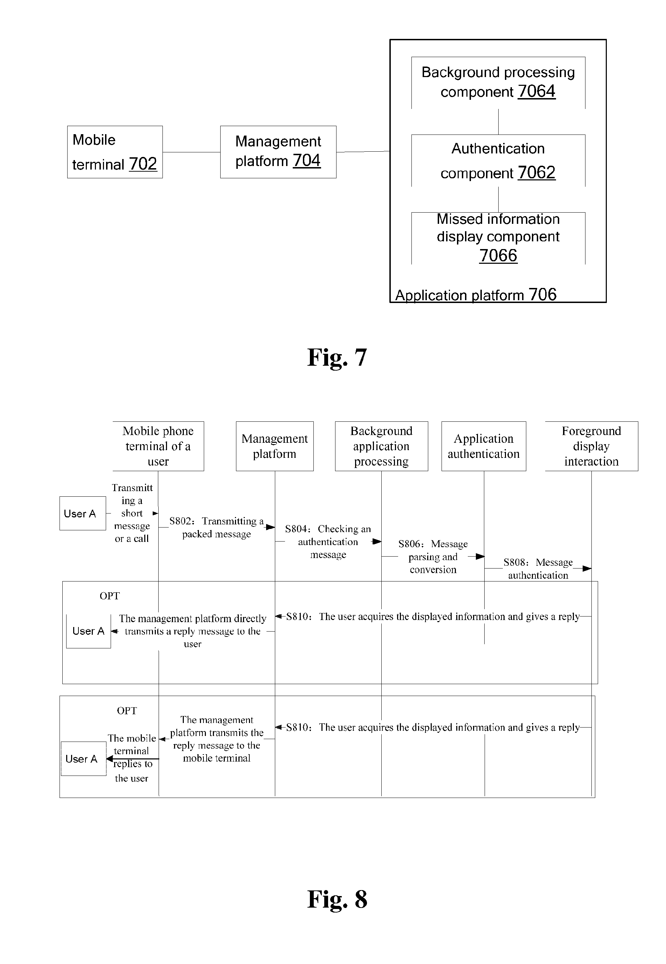

In the preferred embodiment, the mobile terminal takes a smart mobile phone as an example, Fig. 7 is a structure diagram of a fourth system for controlling a message of a mobile terminal, and as shown in Fig. 7, the system for controlling the message of the mobile terminal includes: the mobile terminal 702, wherein the mobile terminal 702 includes a missed information detection unit, which is configured to receive and process missed information of a user, such as missed call information, a missed short message, missed QQ information and missed MSN information. A function of the missed information detection unit can be realized through software, for example, by certain software, message contents such as the missed short message, the missed call information, the missed QQ information and the missed MSN information, and message sources such as a mobile phone number, a QQ number and an MSN number can be extracted from the mobile phone. The message can be transparently transmitted to a specific management platform in a certain format according to a set mode (equivalent to the above transmission rule); the management platform 704, which is configured to perform application and terminal access, terminal and application management and data transparent-transmission between the terminal and an application; and an application platform 706, wherein the application platform 706 can include: an authentication component 7062 (equivalent to the first authentication component 4064), which is configured to perform authentication on a message between the terminal and the application according to a set filtering condition, a background processing component 7064, which is configured to receive the missed information of the user from the management platform and process and transmit the information to a missed information display component, and the missed information display component 7066 (equivalent to the display component 4066), which is configured to display the information processed by the background processing component 7064.

By the system for controlling the message of the mobile terminal, the user can control certain information of the mobile phone without subscribing to a certain service of an operator, and can receive a short message, know a missed call and communicate with a user of a chatting tool such as QQ, MSN and the like on the mobile phone even under the condition of not carrying the mobile phone. However, in order to flexibly transmit the information to be processed, the transmission rule for the message to be processed such as the short message, the missed call, a QQ message and an MSN message can be set on the mobile phone at first, wherein the transmission rule indicates which message needs to be forwarded, a filtering condition for forwarding and the like; there are two manners for setting the transmission rule, one is to set the transmission rule on the software of the mobile phone by the user, and the other is to set the transmission rule through a display interface (such as a web page) of the application platform by the user. The setting of the transmission rule through the display interface of the application platform can be implemented by the following steps that:
S1: the user operates the application display interface, sets a forwarding rule, and submits the set forwarding rule.
S2: the application platform performs message authentication to determine whether the user is permitted to use a function of transmitting the information to be processed to the application platform or not.
S3: an application background processes, packs and converts an authentication message into a message format consistent with the management platform.
S4: the management platform receives the authentication message from the application platform, performs subscribing relationship authentication and the like, extracts the identification information, such as to which user the message is to be transmitted, of the mobile terminal from the authentication message, and transparently transmits the message if the condition is met, and turns to S5.
S5: the mobile phone terminal receives an automatic forwarding message from the management platform, parses the automatic forwarding message, and performs automatic forwarding setting according to an instruction.

Fig. 8 is a flowchart of controlling a short message and a missed call of a user by utilizing a method for controlling a message of a mobile terminal according to an embodiment of the present invention, and as shown in Fig. 8, the flow can include the following steps that:
S802: a mobile phone terminal receives a short message (including a Fetion message) and a missed call, the short message (including the Fetion message) and the missed call are processed and packed into a message to be processed by the software in the mobile phone terminal, the message to be processed including: a mobile phone terminal number, a source mobile phone number and contents (short message contents or the missed call), and the mobile phone terminal transparently transmits the data of the message to be processed to a management platform.
S804: the management platform performs message format check and subscribing relationship authentication on the message to be processed, and transparently transmits the data to a corresponding application platform according to a subscribing relationship.
S806: an application background of the application platform parses the message to be processed, which is transmitted by the management platform, converts a message format of the message to be processed, and transmits the message to be processed to an authentication component (equivalent to the first authentication component 4064) of the application platform.
S808: the authentication component performs internal subscribing relationship authentication, permission authentication and the like on the received message, and transmits the contents of the message passing the authentication to a user display component (equivalent to the display component 4066).
S810: a user (user A) can directly reply the short message on a display interface of the application platform, and can select to directly forward a reply message through the management platform if the management platform can transmit the short message or to reply the short message through the mobile phone if the management platform cannot transmit the short message; for example, for reply contents, the message is forwarded to the management platform through the authentication component and a message processing component; the management platform forwards the reply message to a source mobile phone of the short message or the mobile phone terminal according to a forwarding identifier of the short message, and if being forwarded by the management platform, the reply message is directly transmitted (the transmitted message includes a mobile phone terminal number) after passing the authentication of the management platform; otherwise, the reply message is forwarded to the mobile phone terminal after being authenticated by the management platform, and message processing is performed by the software of the mobile phone terminal, and is automatically transmitted.

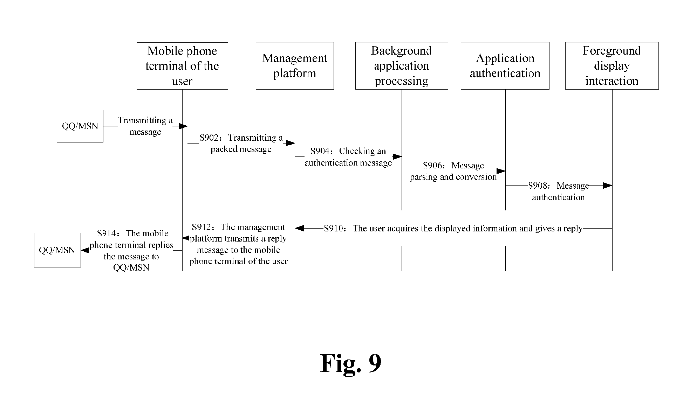

In the preferred embodiment, the application scenario is taken as an example without limitation, and the application scenario is that a mobile phone of the user logs in a chatting tool such as QQ and MSN, but cannot be or is not carried with the user, and a network where the user is located does not support the login of the chatting tool, Fig. 9 is a flowchart of controlling a QQ/MSN message of a mobile phone of a user by utilizing a method for controlling a message of a mobile terminal according to an embodiment of the present invention, and as shown in Fig. 9, the flow can include the following steps that:
S902: the mobile phone terminal receives a QQ or MSN message content, the QQ or MSN message content is processed, and packed by the software in the mobile phone terminal according to a time sequence to generate a message to be processed, wherein the message to be processed includes: a mobile phone terminal number, a source QQ or MSN number and contents, and the data of the message to be processed is transparently transmitted to a management platform.
S904: the management platform performs message format check and subscribing relationship authentication on the message to be processed, and transparently transmits the data to a corresponding application platform according to a subscribing relationship.
S906: an application background of the application platform parses the message to be processed, which is transmitted by the management platform, converts a message format of the message to be processed, and transmits the message to be processed to an authentication component (equivalent to the first authentication component 4064) of the application platform.
S908: the authentication component performs internal subscribing relationship authentication, permission authentication and the like on the received message, and transmits the contents of the message passed the authentication to a user display component (equivalent to the display component 4066).
S910: the user replies the message, and the reply message is performed processing through the authentication component and a message processing component, and is transmitted to the management platform.
S912: the management platform performs reply message format authentication, subscribing relationship authentication and the like, and transparently transmits the data to the mobile phone terminal.
S914: the mobile phone terminal extracts and formats the reply information, and automatically replies the QQ/MSN message according to the time sequence.

In the above preferred embodiment, the user is not required to directly process a missed message on an interface of the mobile phone of the user, the missed message (the information to be processed) of which the mobile phone of the user is not carried with the user can be rapidly acquired by the user, and the user can reply the message through an application interface, so that a user experience is improved.

From the above, the preferred embodiment achieves the following technical effects that: the mobile terminal generates the message to be processed by using the information to be processed on the mobile terminal, transmits the message to be processed to the management platform, and forwards the message to be processed to the application platform through the management platform, and the application platform displays the information to be processed in the message to be processed, so that the user can be reminded of the information to be processed without subscribing to the specific service of the operator, and flexibility in control over the message of the mobile terminal is improved; and meanwhile, the application platform displays the information to be processed in the message to be processed to notify the information to be processed to the user, so that the user can be reminded of the information to be processed even though the mobile terminal is not around, usability in control over the message of the mobile terminal is improved, and the perceptibility of the user over the information to be processed is improved.

Obviously, a technician of the field should know that each component or step of the present invention can be implemented by a universal computing device, and the components or steps can be concentrated on a single computing device or distributed on a network formed by a plurality of computing devices, and can optionally be implemented by programmable codes executable for the computing devices, so that the components or steps can be stored in a storage device for execution with the computing devices, or can form each integrated circuit component, or multiple components or steps therein can form a single integrated circuit component for implementation. As a consequence, the present invention is not limited to any specific hardware and software combination.

The above is only the preferred embodiment of the present invention and not intended to limit the present invention, and the technician of the field can make various modifications and variations to the present invention. Any modifications, equivalent replacements, improvements and the like within the spirit and principle of the present invention shall fall within the scope of protection of the present invention.

## Claims

1. A method for controlling a message of a mobile terminal, **characterized by** comprising:
receiving, by an application platform, a message to be processed of the mobile terminal, which is forwarded by a management platform, wherein the message to be processed is transmitted to the management platform by the mobile terminal; and
displaying, by the application platform, information to be processed in the message to be processed.

2. The method according to claim 1, **characterized in that** before receiving, by the application platform, the message to be processed of the mobile terminal, which is forwarded by the management platform, the method further comprises:
transmitting, by the mobile terminal, the message to be processed to the management platform according to a transmission rule, wherein the transmission rule comprises at least one of: information for indicating a type of the information to be processed, which is to be transmitted, and information for indicating a filtering condition for transmission of the information to be processed, which is to be transmitted.

3. The method according to claim 2, **characterized in that** the transmission rule is directly set on the mobile terminal; and/or, the application platform transmits the set transmission rule to the mobile terminal.

4. The method according to claim 2, **characterized in that** the application platform transmitting the set transmission rule to the mobile terminal comprises:
transmitting, by the application platform, an authentication message and the transmission rule to the management platform, wherein an identifier of the mobile terminal is carried in the authentication message; and
performing, by the management platform, subscribing relationship authentication on the mobile terminal, and under a condition that the mobile terminal passes the subscribing relationship authentication, transmitting the transmission rule to the mobile terminal according to the identifier of the mobile terminal.

5. The method according to claim 1, **characterized in that** before receiving, by the application platform, the message to be processed of the mobile terminal, which is forwarded by the management platform, the method further comprises:
performing, by the management platform, format check on the message to be processed, and performing the subscribing relationship authentication on the mobile terminal; and
under a condition that the message to be processed passes the format check and the mobile terminal passes the subscribing relationship authentication, forwarding, by the management platform, the message to be processed to the application platform according to a subscribing relationship of the mobile terminal.

6. The method according to claim 1, **characterized in that** displaying, by the application platform, the information to be processed comprises:
performing, by the application platform, permission authentication on the message to be processed, wherein a permission is used for indicating whether the information to be processed in the message to be processed is permitted to be displayed on the application platform or not; and
under a condition that the message to be processed passes the permission authentication, displaying, by the application platform, the information to be processed.

7. The method according to claim 1, **characterized in that** after displaying, by the application platform, the information to be processed, the method further comprises:
transmitting, by the application platform, a reply message for the information to be processed to the management platform, wherein the reply message comprises: reply information for the information to be processed, an identifier of the mobile terminal and a source identifier of the information to be processed; and
performing, by the management platform, authentication on the reply message, and under a condition that the reply message passes the authentication, transmitting the reply message to source equipment of the information to be processed according to a forwarding identifier carried in the reply message, or forwarding the reply message to the mobile terminal for the mobile terminal to transmit the reply message to the source equipment of the information to be processed.

8. The method according to claim 1, **characterized in that** the information to be processed comprises at least one of: a short message to be processed, a missed call, QQ information to be processed and Microsoft Network (MSN) information to be processed.

9. A mobile terminal, **characterized by** comprising:
an acquiring component, configured to acquire information to be processed of the mobile terminal and generate a message to be processed, wherein the message to be processed comprises the information to be processed; and
a first transmitting component, configured to transmit the message to be processed to a management platform and forward the message to be processed to an application platform through the management platform, wherein the application platform displays the information to be processed.

10. A system for controlling a message of a mobile terminal, **characterized in that** the system comprises: the mobile terminal according to claim 9; a management platform, configured to forward the message to be processed, which is transmitted by the mobile terminal, to the application platform; and the application platform, configured to receive the message to be processed and display information to be processed in the message to be processed.
